# EUROPÄISCHE PATENTSCHRIFT

(11) **EP 1 745 912 B1**
(45) Veröffentlichungstag und Bekanntmachung des Hinweises auf die Patenterteilung: **05.11.2008**
(21) Anmeldenummer: 06008090.0
(22) Anmeldetag: 13.04.2006
(51) Int. Cl.: B29C 45/16, B29D 12/02, G02C 5/14

(54) **Verfahren zur Herstellung eines Brillenbügels und/oder einer Brillenfassung**
Method for producing a temple and/or frame for spectacles
Procédé destiné à la fabrication d'une branche de lunettes et/ou d'une monture de lunettes

(30) Priorität: 21.07.2005 DE 102005034081
(43) Veröffentlichungstag der Anmeldung: 24.01.2007
(73) Patentinhaber: Uvex Arbeitsschutz GmbH, 90766 Fürth (DE)
(72) Erfinder: Hirschmann, Peter, Dr., 90768 Fürth (DE); Herrmann, Herbert, 86736 Auhausen (DE)
(74) Vertreter: Schneck, Herbert

(56) Entgegenhaltungen:
- EP-A- 1 346 808
- EP-A2- 0 848 034
- WO-A-20/04051348
- WO-A-20/05002826
- GB-A- 524 366
- JP-A- 2003 025 376
- US-A1- 2005 036 101
- HAGEN R: "VERBUNDSPRITZGIESSEN VON POLYAMIDWERKSTOFFEN - NEUE KONSTRUKTIONSMOGLICHKEITEN FUR BRILLENGESTELLE" KUNSTSTOFFE, CARL HANSER VERLAG, MUNCHEN, DE, Bd. 79, Nr. 1, Januar 1989 (1989-01), Seiten 72-76, XP000071878 ISSN: 0023-5563

## Beschreibung

Die Erfindung richtet sich auf ein Verfahren zur Herstellung eines Brillenbügels und/oder einer Brillenfassung umfassend das Spritzen zweier unterschiedlicher, insbesondere unterschiedlich harter Kunststoffkomponenten, wobei der Brillenbügel aus zwei unterschiedlichen, insbesondere unterschiedlich harten Kunststoffkomponenten in einer Einkomponenten-Spritzgießform gespritzt wird. Ein solches Verfahren ist bekannt aus WO 2005/002 826 A1.

Ein anderes Verfahren beschreibt EP 0 529 202. Bei dieser bekannten Ausgestaltung ist vorgesehen, dass am Bügelende eine ösenartige Konfiguration aus relativ hartem Kunststoff ausgebildet ist, die von einer sich auf den Kopf des Benutzers zu vorwölbenden Blase überspannt wird, welche aus einem relativ weichen Kunststoff besteht. Ein solcher bekannter Brillenbügel wird in einer aufwändigen Zweikomponenten-Spritzgießform hergestellt, wobei der harte Kern vollständig mit einer weicheren Hülle umspritzt wird.

Hiervon ausgehend liegt der Erfindung die Aufgabe zugrunde, ein neues Verfahren zur Herstellung eines Brillenbügels anzugeben, welches einerseits kostengünstig realisierbar ist, andererseits aber trotzdem das Arbeiten mit zwei Komponenten ermöglicht.

Die Erfindung wird durch die Merkmale des Anspruchs 1 definiert. Zur Lösung dieser Aufgabe ist Folgendes vorgesehen:

Es wird eine bewusste Abkehr von bisherigen Herstellungsvorstellungen realisiert, wo man stets davon ausging, dass ein harter Kern vollständig von einem weichen Überzug umgeben sein müsse. Vielmehr wird die Verwendung einer Einkomponenten-Spritzgießform dadurch ermöglicht, dass man Teile des Brillenbügels ausschließlich aus dem einen und andere Teile ausschließlich aus dem anderen Kunststoff herstellt. Insbesondere ist vorgesehen, dass der Bereich des Scharniers, der einer hohen mechanischen Belastung unterliegt, aus einer härteren Kunststoffkomponente hergestellt wird, wohingegen der Anlagebereich am Ohr durch eine weichere Kunststoffkomponente gebildet wird.

Dabei erfolgt die Herstellung durch ein Modifizieren des an sich bekannten Verfahrens des Sandwich-Spritzgießens.

Bei diesem Sandwich-Spritzgießen wird herkömmlicher Weise in eine äußere Hautkomponente ein umschlossener Kern eingebracht. Die Prozessführung verläuft dabei in mehreren Stufen. Zunächst wird die Kavität mit dem Material der Außenhaut teilgefüllt und anschließend die Kernkomponente durch die plastische Seele des zuvor eingebrachten Materials nachgespritzt. Hierzu wird ein- und dieselbe Spritzdüse verwendet. Zum Abschluss kann in einem möglichen dritten Schritt mit der ersten Komponente ein Verschluss im Angussbereich erzeugt werden. Auf diese Weise wird verhindert, dass das Kernmaterial an der Oberfläche bleibt und gleichzeitig über das Anguss-System für den nächsten Schuss gereinigt. Die Außenhaut kann auch transparent sein, um auf diese Weise einen farbigen Kern erkennbar zu machen.

Erfindungsgemäß ist demgegenüber vorgesehen, dass zwar zunächst eine äußere Haut- bzw. Hüllkomponente gespritzt wird, und zwar vom ohrseitigen Bügelende her, sodass die äußere Komponente die Form im Bügelbereich ausfüllt, wobei dann anschließend die zweite, härtere Komponente gespritzt wird, die im Bügelbereich in das Innere der äußeren Komponente eintritt, jedoch im Scharnierbereich und im sich anschließenden Bereich die Formausnehmung vollständig ausfüllt. Hierdurch wird ein Brillenbügel geschaffen, der dementsprechend ein weiches ohrseitiges Ende aufweist, welches durch die eindringende härtere Komponente stabilisiert wird, und im Scharnierbereich ausschließlich aus der harten Komponente besteht, die die entsprechende mechanische Belastbarkeit aufweist.

Wenn beispielsweise die härtere Komponente im Scharnierbereich später eingespritzt wird als die weichere Komponente für das Bügelende, wird erreicht, dass der größte Teil des Bügels aus relativ weichem, flexiblem Material besteht und nur dort, wo mechanische Belastungen auftreten, also im Scharnierbereich, ein hartes Material vorgesehen ist. Umgekehrt ist es durch ein späteres Zudosieren der weichen Komponente möglich, nur den eigentlichen Anlagebereich am Kopf des Benutzers aus weicherem Kunststoff zu realisieren. Wenn dieser weichere Kunststoff gegenüber dem härten Kunststoff farblich abgesetzt ist, kann dies dem Käufer und Benutzer auch optisch signalisiert werden.

Als relativ harten Kunststoff kann man ein PC-PBT-Blend und als weicheren Kunststoff TPE oder TPU verwenden.

Nachfolgend wird die Herstellung eines Brillenbügels anhand eines Ausführungsbeispiels in Verbindung mit der Zeichnung näher erläutert. Das Ausführungsbeispiel gehört nicht zur Erfindung. Dabei zeigen:
- Fig. 1: eine schematische Darstellung zur Herstellung eines Brillenbügels im Gegenstromspritzen mit einer harten Komponente nur im Scharnierbereich,
- Fig. 2: eine Fig. 1 entsprechende Seitenansicht,
- Fig. 3: eine Fig. 1 entsprechende Darstellung mit einer weichen Komponente nur im Anlagebereich des Bügels und
- Fig. 4: eine Fig. 3 entsprechende Seitenansicht.

Ein in der Zeichnung dargestellter Brillenbügel 1 umfasst einen Scharnierbereich 2 mit einer Lagerbohrung 3, einen Grundkörper 4 und einen abgekröpften Anlagebereich 5, wo der Bügel 1 hinter dem Ohr des Benutzers am Kopf anliegt.

Aus zwei Spritzdüsen 6 und 7 werden in eine der Bügelgeometrie entsprechende Spritzform zwei unterschiedliche Kunststoffkomponenten eingespritzt und zwar im Scharnierbereich 3 eine härte und im Anlagebereich 5 eine weichere Komponente.

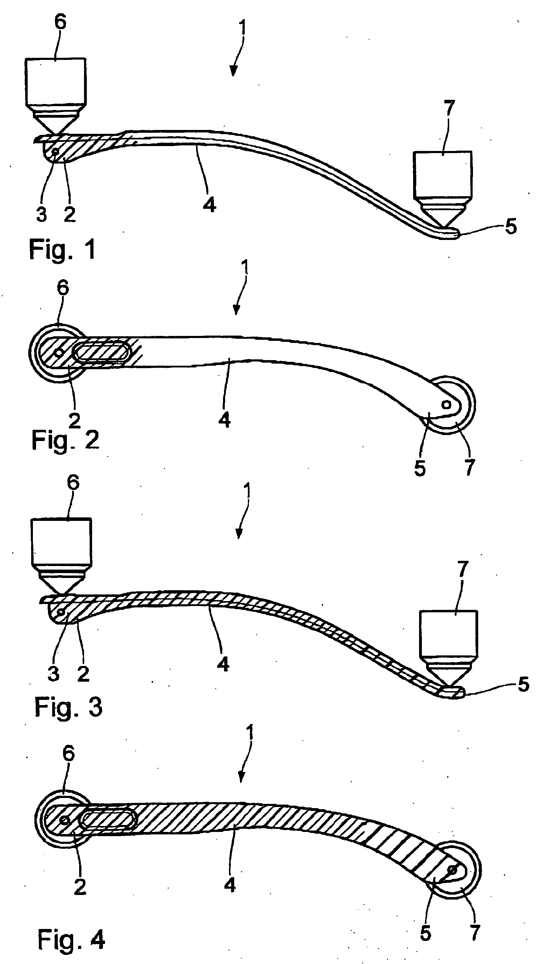

Durch Vorgabe des Zeitpunkts und der Dauer jedes Spritzvorgangs der einzelnen Komponenten kann erreicht werden, dass beispielsweise wie in Fig. 1 und 2 dargestellt, die harte Komponente sich nur über den Scharnierbereich 3 erstreckt und der Grundkörper und der Anlagebereich 5 aus der weichen Komponente bestehen, sodass insgesamt ein relativ weicher, biegsamer und eine körperfreundliche Oberfläche aufweisender Bügel entsteht.

Alternativ kann, wie in Fig. 3 und 4 dargestellt, die harte Komponente durch die Spritzdüse 6 eher und länger dosiert werden, sodass dann lediglich der Anlagebereich 5 aus einer weichen Komponente besteht. Diese kann beispielsweise im Gegensatz zur harten Komponente transparent ausgebildet sein, sodass die Weichheit des Anlagebereiches auch optisch symbolisiert wird.

## Patentansprüche

1. Verfahren zur Herstellung eines Brillenbügels und/oder einer Brillenfassung umfassend das Spritzen zweier unterschiedlicher, insbesondere unterschiedlich harter Kunststoffkomponenten, wobei das Zweikomponenten-Spritzgießen in einer Einkomponenten-Spritzgießform durchgeführt wird, wobei das Spritzgießen nach Art des Sandwich-Spritzgießens durchgeführt wird, **dadurch gekennzeichnet, dass** zunächst vom ohrseitigen Ende des Bügels her eine weiche Komponente eingespritzt wird, welche die Außenseite der Formausnehmung am ohrseitigen Ende des Bügels ausfüllt und anschließend eine zweite, härtere Komponente eingespritzt wird, ebenfalls vom ohrseitigen Ende, welche in das Innere der ersten Komponente eindringt und am Scharnierseitigen Ende des Bügels die Formausnehmung vollständig ausfällt.

2. Verfahren nach Anspruch 1, **dadurch gekennzeichnet, dass** eine Spritzgießfonn mit wenigstens teilweise durch Erodieren, Photoätzen oder dergleichen aufgerauhter Oberfläche eingesetzt wird.

3. Verfahren nach Anspruch 1, **dadurch gekennzeichnet, dass** die unterschiedlich harten Komponenten derart unterschiedlich gefärbt sind, dass der weichere Bereich des Bügelendes sich optisch von dem Bereich des Scharniers bzw. des Bügelgrundkörpers abhebt.

## Claims

1. Method of producing a spectacle temple and/or a spectacle frame, the method comprising the injecting of two different plastic components of in particular different hardness, wherein the double-component injection moulding is performed in a single-component injection mould, wherein the injection moulding is performed in the manner of sandwich injection moulding, **characterized in that** from the ear-side end of the temple is at first injected a soft component which fills the outside of the mould recess at the ear-side end of the temple, and afterwards a second harder component is injected, also from the ear-side end, which penetrates inside the first component and completely fills the mould recess at the hinge-side end of the temple.

2. Method according to claim 1, **characterized in that** an injection mould is used whose surface is at least partially roughened by eroding, photo-etching or the like.

3. Method according to claim 1, **characterized in that** the components of different hardness are coloured differently such that the softer region of the temple end is visually distinguishable from the region of the hinge or the basic temple body, respectively.

## Revendications

1. Procédé de fabrication d'une branche de lunettes et/ou d'une monture de lunettes, comportant l'injection de deux composants de matière plastique différents, ayant en particulier une dureté différente, le moulage par injection de deux composants étant mis en oeuvre dans un moule d'injection à un seul composant, le moulage par injection étant mis en oeuvre à la manière d'un moulage par injection de type sandwich, **caractérisé en ce que** l'on injecte d'abord un composant mou en partant de l'extrémité du côté oreille de la branche, lequel composant remplit le côté extérieur du creux du moule au niveau de l'extrémité du côté oreille de la branche, et on injecte ensuite un deuxième composant plus dur, également à partir de l'extrémité du côté oreille, lequel composant pénètre à l'intérieur du premier composant et remplit totalement le creux du moule au niveau de l'extrémité du côté charnière de la branche.

2. Procédé selon la revendication 1, **caractérisé en ce que** l'on utilise un moule d'injection avec une surface rendue rugueuse au moins partiellement par érosion, photogravure ou similaire.

3. Procédé selon la revendication 1, **caractérisé en ce que** les composants de dureté différente sont teintés de manière différente, de telle sorte que la zone plus souple de l'extrémité de la branche se détache visuellement de la zone de la charnière ou du corps de base de la branche.
